(19) Europäisches Patentamt
European Patent Office
Office européen des brevets

(11) Veröffentlichungsnummer: **0 202 412**
**A1**

(12) **EUROPÄISCHE PATENTANMELDUNG**

(21) Anmeldenummer: **86103518.6**

(22) Anmeldetag: **15.03.86**

(51) Int. Cl.⁴: **C 08 L 95/00**
//C08K5/54

(30) Priorität: **09.05.85 DE 3516660**

(43) Veröffentlichungstag der Anmeldung:
**26.11.86 Patentblatt 86/48**

(84) Benannte Vertragsstaaten:
**AT BE CH DE FR GB IT LI LU NL SE**

(71) Anmelder: **Degussa Aktiengesellschaft**
**Weissfrauenstrasse 9**
**D-6000 Frankfurt am Main 1(DE)**

(72) Erfinder: **Müller, Karl-Hans, Dr.**
**Robert-Koch-Strasse 17**
**D-6454 Bruchköbel(DE)**

(72) Erfinder: **Barthel, Walter**
**Gartenstrasse 7**
**D-6456 Langenselbold(DE)**

(54) **Pulverförmiges Bindemittelkonzentrat.**

(57) Das pulverförmige Bindemittelkonzentrat besteht aus einem bituminösen Bindemittel, einem Silan oder einem Silangemisch, sowie einem Trägerstoff.

Der Trägerstoff kann eine synthetische Kieselsäure, ein pulverförmiger synthetischer Zeolith bzw. ein Zeolithgemisch sein.

EP 0 202 412 A1

Croydon Printing Company Ltd

Degussa Aktiengesellschaft
6000 Frankfurt am Main 1

## Pulverförmiges Bindemittelkonzentrat

Die Erfindung betrifft ein pulverförmiges Bindemittelkonzentrat sowie dessen Verwendung.

In den letzten Jahren wurden verstärkt Bemühungen, die Rückführung von verwendeten Materialien in den Produktionsprozeß (Recycling) zu ermöglichen, bekannt. Die Verknappung und Verteuerung der klassischen Straßenbaustoffe Bitumen und Mineralstoffe sowie Umweltschutzdenken führten zur Wiederverwendung abgängiger Straßenbeläge. Technologien wurden entwickelt, die anfallenden "Altbaustoffe" einer sinnvollen Verwertung zuzuführen. Bekannt sind Wiederverwendung vor Ort, d.h. an der Baustelle (Recycling in place) und Aufbereitung an stationären Anlagen (Recycling in plant). In beiden Fällen kennt man die Verwendung von nur Altasphalt und die Zugabe von frischen Zuschlagstoffen zu Altmaterial. Entscheidend ist die Qualität des entstandenen Mischgutes und die daraus resultierende Verwendungsmöglichkeit. In vielen Fällen lassen sich mit Recyclingasphalt nur untergeordnete Straßenbaumaßnahmen, z.B. Feldwegbau, Unterschichten usw. vornehmen.

Gegenstand der Erfindung ist ein pulverförmiges Bindemittelkonzentrat, welches aus einem bituminösen Bindemittel, einem Silan bzw. einem Silangemisch und einem Trägerstoff besteht.

-A-

Das Bindemittel kann ein aus Erdöl gewonnenes Destillationsbitumen nach DIN 55 946 sein. Ebenso kann das Bindemittel ein Steinkohleteer, wie z.B. ein Carbobitumen oder ein weiterentwickeltes Teerbitumen, sein.

In einer Ausführungsform der Erfindung kann das Bindemittel ein Gemisch aus einem aus Erdöl gewonnenem Destillationsbitumen nach DIN 55 946 und einem Steinkohleteer sein.

Nach DIN 52 000 von 1980 verbleibt als Rückstand der Erdöldestillation das Destillations- oder Straßenbaubitumen, dessen Bezeichung aus den Buchstaben B und einer Zahl besteht, die die mittlere Penetration in $\frac{1}{10}$ mm angibt. Die in der Bundesrepublik Deutschland gebräuchlisten Normenbitumen sind B 25 (hart), B 45, B 65, B 80 und B 200 (weich).

Entsprechend den "Technischen Lieferbedingungen für Bindemittel auf Bitumen- und Teerbasis" (Ausg. 1980) lassen sich auch weiterentwickelte Teerbitumen verwenden.

In die Bindemittel werden gemäß Erfindung in heißflüssigem Zustand z.B. Temperaturen von 100 - 200°C, 0,1 - 10 % eines Silans bzw. eines Silangemisches eingebracht. Dieses modifizierte Bindemittel wird zur Pulverherstellung auf den Trägerstoff aufgebracht.

Als Silane können gemäß Erfindung Alkylsilane, halogenfunktionelle Silane, silciumhaltige Isocyaminate, schwefelhaltige Silane, Azidosilane, Aminosilane und/oder kationische Silane eingesetzt werden.

Als Alkylsilane können z.B. eingesetzt werden:

$(CH_3O)_3Si-C_8H_{17}$

$(CH_3O)_2Si-C_8H_{17}$
$\quad\quad\quad |$
$\quad\quad\;\; CH_3$

$(CH_3O)_3Si-C_{18}H_{37}$

$(CH_3O)_2Si-C_{18}H_{37}$
$\quad\quad\quad |$
$\quad\quad\;\; CH_3$

$(C_2H_5O)_3Si-C_3H_6-$ 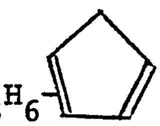

Als halogenfunktionelle Silane können z.B. eingesetzt werden:

$(C_2H_5O)_3Si-C_3H_6-Cl$

$(C_2H_5O)_3Si-C_3H_6-Br$

$(C_2H_5O)_3Si-C_3H_6-J$

$(C_2H_5O)_3Si-C_2H_4-CH-CH_2-Cl$
$\quad\quad\quad\quad\quad\quad\quad\quad |$
$\quad\quad\quad\quad\quad\quad\quad\; Cl$

$(CH_3O)_3Si-C_3H_6-Cl$

$(CH_3O)_3Si-C_3H_6-Br$

-6-

0-44918

$(CH_3O)_3Si-C_3H_6-J$

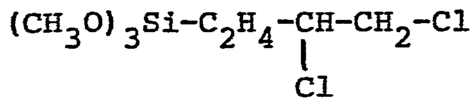

Als Siliciumhaltige Isocyanate können z.B. eingesetzt werden:

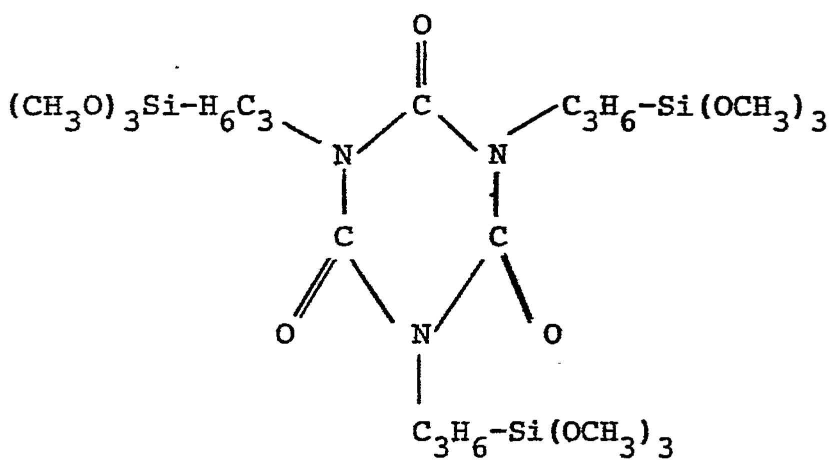

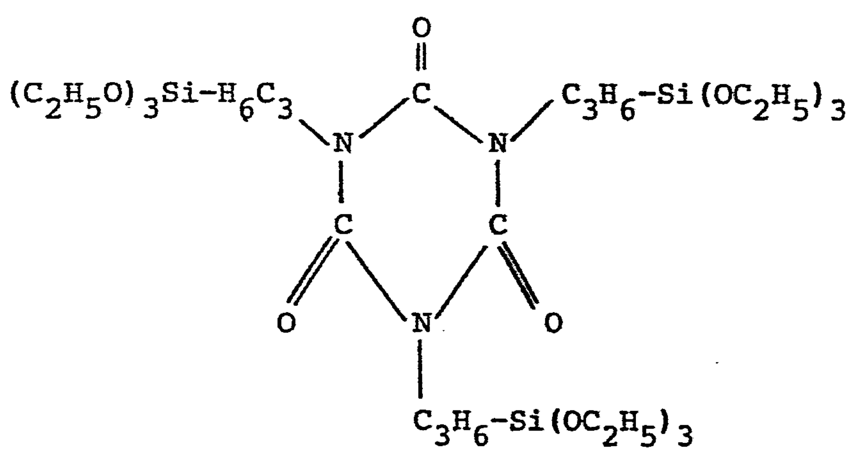

Als schwefelhaltige Silane können z.B. eingesetzt werden:

$(CH_3O)_3Si-C_3H_6-S-C_3H_6-Si(OCH_3)_3$

$(CH_3O)_3Si-C_3H_6-S_2-C_3H_6-Si(OCH_3)_3$

$(CH_3O)_3Si-C_3H_6-S_4-C_3H_6-Si(OCH_3)_3$

$(C_2H_5O)_3Si-C_3H_6-S_4-C_3H_6-Si(OC_2H_5)_3$

$(CH_3O)_3Si-C_3H_6-SCN$

$(C_2H_5O)_3Si-C_3H_6-SCN$

Als Azidosilan kann beispielsweise eingesetzt werden:

$(C_2H_5O)_3Si-C_3H_6-N_3$

Als Aminosilan können beispielsweise eingesetzt werden:

$(C_2H_5O)_3Si-C_3H_6-NH_2$

$(C_2H_5O)_3Si-C_3H_6-NH-C_3H_6-Si(OC_2H_5)_3$

Als kationische Silanen können z.B. eingesetzt werden:

$(C_2H_5O)_3Si-C_3H_6-\overset{\oplus}{N}(CH_3)_3 \quad Cl^{\ominus}$

$(C_2H_5O)_3Si-C_3H_6-\overset{\oplus}{N}(C_2H_5)_3 \quad Cl^{\ominus}$

$(C_2H_5O)_3Si-C_3H_6-\overset{\oplus}{N}(CH_3)_2-CH_2-C_6H_5 \quad Cl^{\ominus}$

-8-

$$(C_2H_5O)_3Si-C_3H_6-\overset{\oplus}{N}(CH_3)_2-C_{12}H_{25} \quad Cl^{\ominus}$$

$$(C_2H_5O)_3Si-C_3H_6-\overset{\oplus}{N}(CH_3)_2-C_{16}H_{33} \quad Cl^{\ominus}$$

$$(C_2H_5O)_3Si-C_3H_6-\overset{\oplus}{N}(CH_3)_2-C_{18}H_{37} \quad Cl^{\ominus}$$

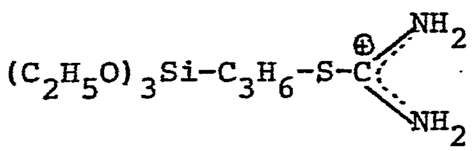

$Cl^{\ominus}$

Vorzugsweise kann als Silan Bis(3-triethoxypropylsilyl-)tetrasulfid eingesetzt werden.

Der Anteil an Silan kann 0,1 bis 10 Gew.-%, vorzugsweise 1 bis 4 Gew.-%, bezogen auf das gesamte pulverförmige Bindemittelkonzentrat sein.

Der Trägerstoff kann aus einer synthetischen Kieselsäure und/oder einem pulverförmigem, synthetischen Zeolithen bzw. einem Zeolithgemisch bestehen.

Die synthetische Kieselsäure kann sowohl eine Fällungskieselsäure als auch eine auf pyrogenem Wege hergestellte Kieselsäure sein.

In einer bevorzugten Ausführungsform kann die Fällungskieselsäure eine sprühgetrocknete Fällungskieselsäure sein.

Der Anteil an Kieselsäure kann 15 bis 70 Gew.-%, bezogen auf das gesamte pulverförmige Bindemittelkonzentrat sein.

Der Anteil an synthetischem, pulverförmigem Zeolithen bzw. Zeolithgemisch kann 10 bis 90 Gew.-%, bezogen auf das gesamte pulverförmige Bindemittelkonzentrat sein.

-/-

Enthält das erfindungsgemässe Bindemittelkonzentrat sowohl synthetische Kieselsäure als auch synthetischen Zeolithen, so kann deren gemeinsamer Anteil an dem gesamten Bindemittelkonzentrat 20 bis 80 Gew.-% betragen.

Der Begriff Zeolith entspricht der Beschreibung nach D.W. Breck "Zeolite moleculare sieves", Wiley Interscience 1974, Seiten 133 bis 180. Die eingesetzten Zeolithe können einen Wassergehalt von bis zu 27 % aufweisen.

Als pulverförmigen kristallinen synthetischen Zeolithen kann das erfindungsgemäße Bindemittelkonzentrat einen Zeolithen des Typs A enthalten. Der Zeolith A weist die allgemeine Formel

$$1{,}0 \pm 0{,}2 \frac{M_2O}{n} \cdot Al_2O_3 : 2{,}0 \pm 0{,}5\ SiO_2 \cdot y\ H_2O$$

auf, wobei M ein Metallkation, wie z.B. Natrium- oder Kalium-Kation, n seine Wertigkeit und y ein Wert bis zu 5 bedeuten.

Vorzugsweise kann das Bindemittelkonzentrat einen Zeolithen des Typs A enthalten, welcher nach Verfahren gemäß DE-AS 23 33 068, DE-AS 24 47 021, DE-AS 25 17 218, DE-OS 26 51 485, DE-OS 26 51 446, DE-OS 26 51 436, DE-OS 26 51 419, DE-OS 26 51 420 und/oder DE-OS 26 51 437 hergestellt wird. Der eingesetzte Zeolith A kann auch nach anderen bekannten Verfahren hergestellt werden, z.B. gemäß DE-PS 10 38 017 oder DE-AS 16 67 620.

Vorzugsweise kann der eingesetzte Zeolith A die folgenden physikalisch-chemischen Daten aufweisen:

Kornverteilung (Coulter Counter)

| | | |
|---|---|---|
| Anteil | $<$15 Mikrometer: | 99 - 100 Gew.-% |
| | $<$10 Mikrometer: | 95 - 99 Gew.-% |
| | $<$ 1 Mikrometer: | 5 Gew.-% |

Glühverlust nach DIN 55 921: $<$24 %

Weiterhin kann das erfindungsgemäße Bindemittelkonzentrat als pulverförmigen Zeolithen einen Zeolithen des Typs Y mit der allgemeinen Formel

$$0,9 \pm 0,2 \frac{M_2O}{n} : Al_2O_3 \cdot XSiO_2 : yH_2O$$

enthalten, wobei M ein Metallkation, wie z.B. Natrium- oder Kaliumkation, n seine Wertigkeit, x ein Wert größer als 3 und y ein Wert bis 9 bedeuten.

Der eingesetzte Zeolith Y kann die folgenden physikalisch-chemischen Kenndaten aufweisen:

Glühverlust nach DIN 55 921 $<$27 %

Kornverteilung (Coulter-Counter)

| | | |
|---|---|---|
| Anteil | $<$15 Mikrometer: | 96 - 100 Gew.-% |
| | $<$10 Mikrometer: | 85 - 99 Gew.-% |
| | $<$ 1 Mikrometer: | 20 Gew.-% |

Dieses zeolithische Molekularsiebpulver kann beispielsweise gemäß DE-AS 10 98 929, DE-AS 12 03 239 oder DE-AS 12 63 056 hergestellt werden.

Weiterhin kann das erfindungsgemäße Bindemittelkonzentrat als pulverförmigen Zeolithen einen Zeolithen des Typs X mit der allgemeinen Formel

$$0{,}9 \pm 0{,}2 \frac{M_2}{n} : Al_2O_3 : 2{,}5 \pm 0{,}5\ SiO_2 \cdot y\ H_2O$$

enthalten, wobei M ein Metallkation, z.B. Natrium- oder Kaliumkation, n seine Wertigkeit und y ein Wert bis zu 8 bedeuten.

Dieser pulverförmige Zeolith kann nach DE-PS 10 38 016, DE-PS 11 38 383 oder DE-OS 20 28 163 hergestellt werden.

Der eingesetzte Zeolith X kann die folgenden physikalisch-chemischen Daten aufweisen:

| | |
|---|---|
| Glühverlust (DIN 55 921) | 27 Gew.-% |
| Korngrößenverteilung (Coulter-Counter) | |
| Anteil < 15 Mikrometer: | 96 - 100 Gew.-% |
| < 10 Mikrometer: | 85 - 99 Gew.-% |
| < 1 Mikrometer: | 20 Gew.-% |

Weiterhin kann das erfindungsgemäße Bindemittelkonzentrat als pulverförmigen Zeolithen einen Zeolithen des Typs A enthalten. Die Bezeichung Zeolith P ist synonym mit der Bezeichnung synthetischer Phillipsit und Zeolith B. Beispielsweise kann man den

Zeolithen P nach dem Verfahren gemäß der FR-PS 12 13 628 herstellen.

Der eingesetzte Zeolith P kann die folgenden physikalisch-chemischen Kenndaten aufweisen:

| | | |
|---|---|---|
| Glühverlust (DIN 55 921) | | 15 Gew.-% |
| Korngrößenverteilung (Coulter-Counter) | | |
| Anteil | $<$ 15 Mikrometer: | 99 - 100 Gew.-% |
| | $<$ 10 Mikrometer: | 97 - 99 Gew.-% |
| | $<$ 1 Mikrometer: | 20 Gew.-% |

Das erfindungsgemäße Bindemittelkonzentrat kann weiterhin als pulverförmigen Zeolithen Hydroxysodalith mit der allgemeinen Formel

$$Na_2O \; . \; Al_2O_3 \; . \; 2\;SiO_2 \; . \; 2{,}5\;H_2O$$

enthalten. Hydroxysodalith kann beispielsweise aus Zeolith A mittels Kochen in wässriger Natronlauge hergestellt werden (vgl. D.W. Breck "Zeolite molecular sieves", Seite 275 (1974) Wiley Interscience Publication).

Der eingesetzte Hydroxysodalith kann die folgenden physikalischen-chemischen Kenndaten aufweisen:

| | | |
|---|---|---|
| Glühverlust (DIN 55 921) | | 15 Gew.-% |
| Korngrößenverteilung (Coulter-Counter) | | |
| Anteil | $<$ 15 Mikrometer: | 99 - 100 Gew.-% |
| | $<$ 10 Mikrometer: | 90 - 99 Gew.-% |
| | $<$ 1 Mikrometer: | 10 Gew.-% |

In einer weiteren Ausführungsform der Erfindung kann das erfindungsgemäße Bindemittelkonzentrat ein Gemisch aus den angegebenen Zeolithen enthalten. Dieses Gemisch kann sowohl durch Mischen der reinen Zeolithe als auch durch direkte Synthese mittels des Fällverfahrens hergestellt werden. Gemische, welche direkt hergestellt werden können, können Gemische der Zeolithe A und P, der Zeolithe A und X, der Zeolithe A und Hydroxysodalith, der Zeolithe P und X oder der Zeolithe P und Y sein. In einer vorzugsweisen Ausführung kann das Bindemittelkonzentrat ein Gemisch aus Zeolith X und Zeolith P im Verhältnis 80 bis 5 zu 20 bis 95 enthalten.

Ein derartiges Gemisch kann beispielsweise gemäß DE-OS 20 28 163, Seite 15, Tabelle 3, Beispiel 3 mittels eines Fällverfahrens hergestellt werden.

Die Herstellung des erfindungsgemäßen pulverförmigen Bindemittelkonzentrates kann durch einfaches Vermischen der einzelnen Bestandteile erfolgen.

Das erfindungsgemäße Bindemittelkonzentrat kann zur Verbesserung von Altasphalt eingesetzt werden. Es wird dabei als Zuschlagstoff zu Altasphalt bzw. altasphalthaltigen Mischgütern z.B. beim Recycling von abgängigen Strassenbelägen zugesetzt.

Weiterhin kann das erfindungsgemäße Bindemittelkonzentrat als Zuschlagstoff bei der Herstellung von bituminösen Baustoffen, wie Gußasphalt, Walzasphalt, Dachbahnen, Fugenmassen, Spachtelmassen, Dachbeschichtung, Isoliermassen, Unterbodenschutz, Korrosionsschutz, Antidröhnmassen etc. eingesetzt werden.

Das erfindungsgemäße pulverförmige Bindemittelkonzentrat ermöglicht eine Zudosierung sowohl vor Ort (z.B. bei dem Remix-Verfahren) als auch an der stationären Mischanlage (Batch-Plant oder Drumm-Mix). Die Zugabemenge kann 1 - 5 Gew.-%, bezogen auf den Altasphaltanteil betragen.

Folgende Verbesserungen treten ein:

- Verdünnung des verhärteten Altasphalts
- Verbesserung der Haftfestigkeit des gesamten Bindemittels.

Diese Verbesserung des Altasphaltgemisches ermöglicht die Verwendung des Altasphalts für größere Anforderungen aufgrund der Verbesserung der Verdichtbarkeit, der Erhöhung der Standfestigkeit bei hohen Außentemperaturen sowie der Verbesserung der Kälteeigenschaften.

Weitere Vorteile des erfindungsgemäßen Bindemittelkonzentrates sind:

- einfache Lagerung und Transport in Silos und Säcken
- unbegrenzte Haltbarkeit
- einfache Dosierung und dadurch keine Minderung der Asphaltmischanlagen-Leistung

Das erfindungsgemäße Bindemittelkonzentrat kann beispielsweise wie folgt hergestellt werden:

Die synthetische Kieselsäure und der pulverförmige Zeolith werden bei Normaltemperatur in einem geschlossenen Mischer vorgelegt und ausgiebig durchgemischt. Das heisse und flüssige, mit Silan modifizierte Bindemittel wird auf den Trägerstoff aufgesprüht oder eingedüst.

Beispiel 1

| | |
|---|---|
| Sipernat 22 | 17,0 Gew.-% |
| Wessalith P | 33,0 Gew.-% |
| Bitumen B 200 | 47,5 Gew.-% |
| Silan | 2,5 Gew.-% |
| | 100,0 Gew.-% |

Beispiel 2

| | |
|---|---|
| Sipernat 22 | 20,0 Gew.-% |
| Wessalith P | 40,0 Gew.-% |
| Bitumen B 200 | 37,5 Gew.-% |
| Silan | 2,5 Gew.-% |
| | 100,0 Gew.-% |

Produktbeschreibung: Trockenes, fließ- und rieselfähiges, mittel- bis schwarzbraunes Pulver.

Schüttdichte : 0,45 - 0,70 [kg/l]

| | | |
|---|---|---|
| Kornaufbau | : 0 - 0,09 mm | 1 - 5 Gew.-% |
| | 0,09 - 0,2 mm | 12 - 38 Gew.-% |
| | 0,2 - 0,4 mm | 6 - 20 Gew.-% |
| | 0,4 - 0,8 mm | 8 - 25 Gew.-% |
| | 0,8 - 1,0 mm | 3 - 14 Gew.-% |
| | 1,0 - 2,0 mm | 5 - 15 Gew.-% |
| | >2,0 - mm | 1 - 10 Gew.-% |

Die Kieselsäure Sipernat 22 ist eine gefällte und sprühgetrocknete Kieselsäure mit den folgenden physikalisch-chemischen Kenndaten:

| | | |
|---|---|---|
| Oberfläche nach BET, $m^2/g$ | | 190 |
| Mittlere Größe der Primärteilchen nm | | 18 |
| Mittlere Größe der Sekundärteilchen Mikrometer | | 80 |
| Stampfdichte (DIN 53 194) g/l | | 220 |
| Trocknungsverlust (DIN 55 921) (2 Std. bei 105°C) | % | 6 |
| Glühverlust[1] (DIN 55 921) (2 Std. bei 1000°C) | % | 5 |
| pH-Wert (DIN 53 200) | | 6,3 |
| $SiO_2$ (DIN 55 921)[3] | % | 98 |
| $Al_2O_3$ % | | 0,2 |
| $Fe_2O_3$ % | | 0,03 |
| $Na_2O$ % | | 1 |
| $SO_3$ % | | 0,8 |
| Siebrückstand nach Mocker (DIN 53 580) % | | 0,5 |
| Ölzahl (nach DIN 53 199) g/100 g | | |

1) bezogen auf die 2 Stunden bei 105°C getrocknete Substanz
2) in Wasser: Aceton oder Methanol 1:1
3) bezogen auf die 2 Stunden bei 1000°C geglühte Substanz
4) enthält ca. 2 % chemisch gebundenen Kohlenstoff

Wessalith P ist ein Zeolithpulver des Typs A, welches gemäß DE-OS 26 51 436 hergestellt wurde.

Bitumen B 200 ist durch die folgenden Paramter gekennzeichnet:

Normenbitumen gemäß DIN 1995

| | | |
|---|---|---|
| Penetration bei 25°C in 1/10 mm | | 160 - 210 |
| Erweichungspunkt Ring und Kugel | C | 37 - 44 |
| Brechpunkt nach Fraass, höchstens | °C | - 15 |
| Asche, höchstens | Gew.-% | 0,5 |
| Duktilität (Streckbarkeit) bei 25°C | mind. cm | 100 |
| Unlösliches, abzügl. Asche, höchstens | Gew.-% | 0,5 |
| Paraffin, höchst. | Gew.-% | 2,0 |
| Flammpunkt o.T. über °C | | 220 |
| Dichteverhältnis 25°/25° | | 1,01-1,04 |
| Gewichtsverlust bei 163 C in 5 Stunden höchstens | Gew.-% | 2,0 |
| Anstieg des Erweichungspunktes R.u.K. nach dem Erhitzen, höchstens | °C | 10 |
| Brechpunkt nach Fraass nach dem Erhitzen höchstens | °C | -10 |
| Verminderung der Penetration nach dem Erhitzen, höchstens | % | 60 |
| Duktilität nach dem Erhitzen bei 25°C | mind.cm | 50 |

Das Silan Si 69 ist ein Bis(3-triethoxysilylpropyl)tetrasulfid der Formel

$$(EtO)_3-Si-(CH_2)_3-S_4-(CH_2)_3-Si(EtO)_3$$

85 128 FA



Degussa Aktiengesellschaft
6000 Frankfurt am Main 1

# Pulverförmiges Bindemittelkonzentrat

## Patentansprüche

1. Pulverförmiges Bindemittelkonzentrat, bestehend aus einem bituminösen Bindemittel, einem Silan bzw. einem Silangemisch und einem Trägerstoff.

2. Pulverförmiges Bindemittelkonzentrat nach Anspruch 1, dadurch gekennzeichnet, daß das Bindemittel ein aus Erdöl gewonnenes Destillationsbitumen nach DIN 55 946 ist.

3. Pulverförmiges Bindemittelkonzentrat nach Anspruch 1, dadurch gekennzeichnet daß das Bindemittel ein Steinkohleteer ist.

4. Pulverförmiges Bindemittelkonzentrat nach Anspruch 1, dadurch gekennzeichnet, daß das Bindemittel ein Gemisch aus einem aus Erdöl gewonnenem Destillationsbitumen nach DIN 55 946 und einem Steinkohleteer ist.

5. Pulverförmiges Bindemittelkonzentrat, nach den Ansprüchen 1 bis 4, dadurch gekennzeichnet, daß der Trägerstoff aus einer synthetischen Kieselsäure und/oder einem pulverförmigem, synthetischen Zeolithen bzw. einem Zeolithgemisch besteht.

6. Verwendung des pulverförmigen Bindemittelkonzentrates nach den Ansprüchen 1 bis 5 zur Verbesserung von Altasphalt.

0202412

Europäisches Patentamt

# EUROPÄISCHER RECHERCHENBERICHT

Nummer der Anmeldung

EP 86 10 3518

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 045 363 (DEGUSSA)<br>* Ansprüche 1-3 *<br>--- | 1,5 | C 08 L 95/00 //<br>C 08 K 5/54 |
| Y | EP-A-0 024 513 (DEGUSSA)<br>* Zusammenfassung; Seite 2, erster Absatz * | 1,5 | |
| A | | 2 | |
| | --- | | |
| A | EP-A-0 105 133 (DEGUSSA)<br>* Zusammenfassung *<br>----- | | |
| | | | RECHERCHIERTE SACHGEBIETE (Int. Cl.4) |
| | | | C 08 L |

Der vorliegende Recherchenbericht wurde für alle Patentansprüche erstellt.

| Recherchenort | Abschlußdatum der Recherche | Prüfer |
|---|---|---|
| DEN HAAG | 13-08-1986 | GIRARD Y.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument